Europäisches Patentamt

European Patent Office

Office européen des brevets

(19)

(11) **EP 0 758 918 B1**

(12) **EUROPÄISCHE PATENTSCHRIFT**

(45) Veröffentlichungstag und Bekanntmachung des
Hinweises auf die Patenterteilung:
**09.09.1998 Patentblatt 1998/37**

(21) Anmeldenummer: 95919399.6

(22) Anmeldetag: **05.05.1995**

(51) Int. Cl.[6]: **B01F 5/04**, B01J 19/24

(86) Internationale Anmeldenummer:
**PCT/EP95/01701**

(87) Internationale Veröffentlichungsnummer:
**WO 95/30476 (16.11.1995 Gazette 1995/49)**

(54) **VERFAHREN UND VORRICHTUNG ZUR DURCHFÜHRUNG CHEMISCHER REAKTIONEN MITTELS MIKROSTRUKTUR-MISCHUNG**

METHOD AND DEVICE FOR PERFORMING CHEMICAL REACTIONS WITH THE AID OF MICROSTRUCTURE MIXING

PROCEDE ET DISPOSITIF PERMETTANT LA REALISATION DE REACTIONS CHIMIQUES AU MOYEN D'UN MELANGE A MICROSTRUCTURE

(84) Benannte Vertragsstaaten:
**AT BE CH DE DK ES FR GB GR IE IT LI NL PT SE**

(30) Priorität: **09.05.1994 DE 4416343**
**20.09.1994 DE 4433439**

(43) Veröffentlichungstag der Anmeldung:
**26.02.1997 Patentblatt 1997/09**

(73) Patentinhaber:
- **BAYER AG**
 **51368 Leverkusen (DE)**
- **Forschungszentrum Karlsruhe GmbH**
 **76133 Karlsruhe (DE)**

(72) Erfinder:
- **SCHUBERT, Klaus**
 **D-76227 Karlsruhe (DE)**

- **BIER, Wilhelm**
 **D-76344 Eggenstein-Leopoldshafen (DE)**
- **LINDER, Gerd**
 **D-76149 Karlsruhe (DE)**
- **SEIDEL, Dieter**
 **D-76344 Eggenstein-Leopoldshafen (DE)**
- **MENZEL, Thomas**
 **D-40723 Hilden (DE)**
- **KOGLIN, Bernd**
 **D-51467 Bergisch Gladbach (DE)**
- **PREISIGKE, Hans-Joerg**
 **D-51065 Köln (DE)**
- **HERRMANN, Erhard**
 **D-51373 Leverkusen (DE)**

(56) Entgegenhaltungen:
**GB-A- 2 073 604          US-A- 4 313 680**

**Beschreibung**

Zur Durchführung einer chemischen Reaktion in kontinuierlicher Fahrweise müssen die Reaktionspartner kontinuierlich einem chemischen Reaktor zugeführt werden und mit Hilfe eines Mischorgans (Mischers) innig in Kontakt gebracht, d.h. gut vermischt werden. Ein einfacher Reaktor ist z.B. ein Behälter mit einem Rührer als Mischorgan. Im Regelfall laufen im Reaktor bei Kontakt der Reaktanden mehrere Reaktionen, sogenannte Haupt- und Nebenreaktionen ab. Dabei ist es Ziel des Verfahrensingenieurs, die Reaktionen und damit auch die Vermischung so zu führen, daß selektiv eine möglichst hohe Ausbeute an erwünschtem Produkt erzielt wird.

Die Güte der Vermischung und der Einfluß des Mischorgans auf die Ausbeute an erwünschtem Produkt hängt dabei in großem Maße vom Verhältnis der durch die Reaktionskinetik gegebenen chemischen Reaktionsgeschwindigkeit zur Mischgeschwindigkeit ab. Handelt es sich bei den chemischen Reaktionen um langsame Reaktionen, so ist die chemische Reaktion in der Regel wesentlich langsamer als die Vermischung. Die Brutto-Reaktionsgeschwindigkeit und die Ausbeute an erwünschtem Produkt wird dann durch den langsamsten Schritt, nämlich die Kinetiken der ablaufenden chemischen Reaktionen, und dazu durch das globale Vermischungsverhalten (Verweilzeitverteilung, Makromischung) des verwendeten chemischen Reaktors bestimmt. Liegen die chemischen Reaktionsgeschwindigkeiten und die Vermischungsgeschwindigkeit in der gleichen Größenordnung, so kommt es zu komplexen Wechselwirkungen zwischen den Kinetiken der Reaktionen und dem lokalen, durch die Turbulenz bestimmten Vermischungsverhalten im verwendeten Reaktor und am Mischorgan (Mikromischung). Tritt der Fall ein, daß die chemischen Reaktionsgeschwindigkeiten wesentlich schneller sind als die Mischgeschwindigkeit so werden die Brutto-Geschwindigkeiten der ablaufenden Reaktionen und die Ausbeuten im wesentlichen durch die Vermischung, d.h. durch das lokale, zeitabhängige Geschwindigkeits- und Konzentrationsfeld der Reaktanden, d.h. die Turbulenzstruktur im Reaktor bzw. am Mischorgan bestimmt [1].

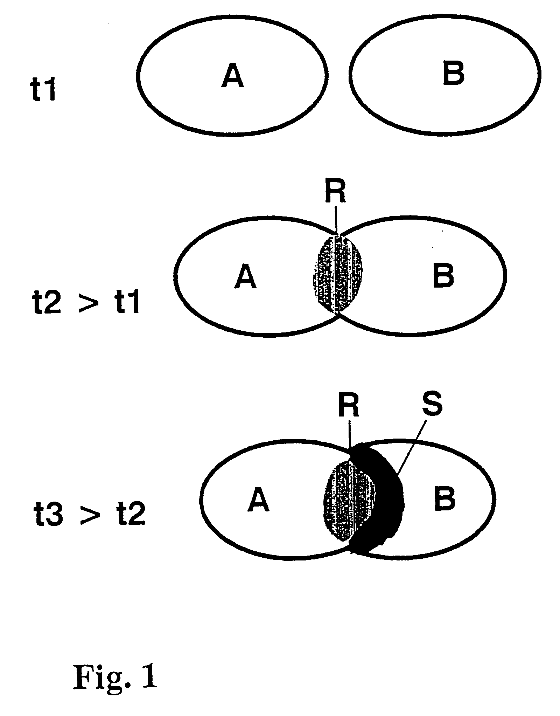

Der Einfluß der Vermischung auf den Ablauf einer chemischen Reaktion ist besonders groß bei Reaktionen mit konkurrierenden Folgereaktionen. Am Beispiel dieses Reaktionsschemas läßt sich der oben dargestellte Sachverhalt vertiefend erläutern (s. Fig. 1):

$$A + B \rightarrow R$$

$$B + R \rightarrow S$$

In einem ersten Reaktionsschritt reagieren die beiden Reaktanden A und B zum erwünschten Produkt R. Diesem folgt ein zweiter Reaktionsschritt, bei dem das gewünschte Produkt R mit weiterer Ausgangskomponente B zum unerwünschten Folgeprodukt S weiterreagiert. Wichtig bei der Reaktionsführung ist, daß das erwünschte Zwischenprodukt R nicht mit noch nicht reagiertem B in Kontakt kommt und der Reaktor möglichst rückvermischungsfrei gefahren wird.

Im chemischen Reaktor bedeutet dies schematisch vereinfacht folgendes: Zum Zeitpunkt t1 liegen die Ausgangssubstanzen in Fluidballen nebeneinander vor. Anschließend (t2 > t1) bildet sich an der Stelle, an der die Fluidballen miteinander mischen das erwünschte Produkt R. Ist die Mischung langsamer als die Reaktionsgeschwindigkeit der Folgereaktionen, so bildet sich beim Kontakt des erwünschten Zwischenproduktes R mit noch nicht reagiertem Edukt B das unerwünschte Folgeprodukt S. Das heißt, zur Vermeidung des unerwünschten Folgeproduktes S müssen die Ausgangskomponenten A und B möglichst schnell miteinander gemischt werden. Diese Problematik wird immer größer, je schneller die Reaktionen gegenüber der Vermischung ablaufen.

Nach dem Stand der Technik werden zur Durchführung schneller Reaktionen in Konti-Fahrweisen eine Reihe von Mischorganen eingesetzt. Man kann hier unterscheiden zwischen dynamischen Mischern, wie z.B. Rührer, Turbinen oder Rotor-Stator-Systemen, statischen Mischern, wie z.B. Kenics-Mischern, Schaschlik-Mischern oder SMV-Mischern und Strahlmischern, wie z.B. Düsenmischern oder T-Mischer [2-4].

Bevorzugt werden zur schnellen Vermischung der Ausgangsstoffe bei schnellen Reaktionen mit unerwünschten Folge- bzw. Nebenreaktionen Düsenmischer eingesetzt.

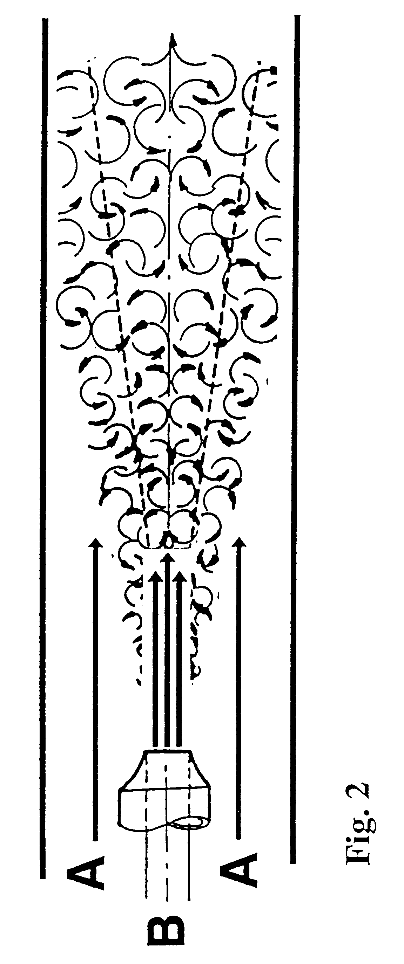

Bei Strahl- bzw. Düsenmischern wird eine der beiden Ausgangskomponenten mit hoher Strömungsgeschwindigkeit in die andere Komponente verdüst (s. Fig. 2). Dabei wird die kinetische Energie des eingedüsten Strahles (B) im wesentlichen hinter der Düse dissipiert, d.h. durch turbulenten Zerfall des Strahles in Wirbel und weiteren turbulenten Zerfall der Wirbel in immer kleinere Wirbel in Wärme umgewandelt. In den Wirbeln sind jeweils die Ausgangskomponenten enthalten, die in den Fluidballen nebeneinander vorliegen (Makromischung, vgl. schematische Darstellung in Fig. 1). Zwar tritt an den Rändern dieser zunächst größeren Strukturen zu Beginn des turbulenten Wirbelzerfalls eine geringe Mischung durch Diffusion auf. Die vollständige Vermischung wird jedoch erst erreicht, wenn der Wirbelzerfall soweit fortgeschritten ist, daß mit Erreichen von Wirbelgrößen in der Größenordnung des Konzentrations-Mikromaßes (Batchelor-Länge) [5, 6] die Diffusion schnell genug ist, um die Ausgangskomponenten in den Wirbeln vollständig miteinander zu vermischen. Die für die vollständige Vermischung nötige Mischzeit hängt neben den Stoffdaten und der Geometrie der Apparatur im wesentlichen von der spezifischen Energiedissipationsrate ab.

Die Vermischungsvorgänge bei den häufig zur Anwendung kommenden Mischern nach dem Stand der Technik sind prinzipiell ähnlich (bei dynamischen Mischern und Statikmischern werden die Wirbel noch zusätzlich mechanisch zerteilt bei allerdings in der Regel wesentlich niedrigeren spezifischen Energiedissipationsraten). Dies bedeutet, daß bei den nach dem Stand der Technik verwendeten Mischern bis zur vollständigen Vermischung durch Diffusion immer die Zeit des Wirbelzerfalls vergeht. Für sehr schnelle Reaktionen bedeutet dies, daß entweder sehr hohe Energiedissipationsraten eingestellt werden müssen, um unerwünschte Neben- und Folgereaktionen zu vermeiden oder bei Reaktionen mit noch größeren Reaktionsgeschwindigkeiten die entsprechenden Reaktionen nicht optimal, d.h. nur bei Neben- bzw. Folgeproduktbildung, durchgeführt werden.

Weiterhin ist im Stand der Technik die Vermischung zweier Komponenten in einem Mikrostruktur-Reaktor beschrieben [7]. In einem Mikroreaktor zur Durchführung chemischer Reaktionen mit starker Wärmetönung werden die Eduktströme innerhalb einer Mikrostruktur kontinuierlich miteinander gemischt. Die Mischung erfolgt über querlaufende Rillen, die die beiden Stoffströme miteinander verbinden. Dabei stellen die innerhalb der Mikrostruktur vorliegenden Rillen die Mischräume dar. Dieser Mischer hat den Vorteil, daß die einzelnen Stoffströme schon innerhalb der Mikrostruktur in feine Volumenelemente aufgeteilt werden, ohne daß die Stoffströme dabei miteinander in Kontakt geraten. Dadurch wird ein Teil der Mischzeit, die durch den turbulenten Zerfall der Wirbel, wie sie in herkömmlichen Mischern benötigt wird, gespart und die Mischung erfolgt schneller. Da jedoch die Rillen verschiedene Längen aufweisen, hat diese Art des Mischens jedoch den Nachteil, daß dadurch in den einzelnen Kanälen unterschiedliche Druckverluste auftreten. Dies hat zur Folge, daß die Komponenten an verschiedenen Stellen in der Mischkammer mit unterschiedlichen Strömungsgeschwindigkeiten austreten. Damit ergibt sich eine örtlich inhomogene Vermischung innerhalb der Struktur, die bei schnellen Reaktionen zu unerwünschten Folge- und Nebenreaktionen führen kann. Aus [11] ist ferner eine Mischeranordnung in einer Kolonne mit Misch-, Katalysator- bzw. Kanalelementen bekannt, die in Schichten oder Lagen angeordnet sein können. Benachbarte Elemente einer Lage oder Schicht und aufeinanderfolgende Elemente benachbarter Schichten sind gegeneinander bzw. abwechselnd zur Hauptströmungsrichtung geneigt angeordnet. Die Elemente können platten- oder wabenartig sein und haben parallel zueinander verlaufende Kanäle. Dadurch wird der Strömungswiderstand vermindert; in den Bereichen des Übergangs von den Kanalelementen in den Kolonnenraum wird die Mischwirkung durch Turbulenzen und die Vereinigung der verschiedenen Teilströme angeregt. Die Mischelemente bzw. deren Kanäle können ganz oder teilweise als Katalysatoren ausgebildet sein zum verbesserten Ablauf katalytischer Reaktionen.

Desweiteren ist aus GB-A-2073604 ein makroskopischer statischer Mischer bekannt, der darauf beruht, daß die zu vermischenden Stoffströme in zwei verschiedene Kanalsysteme mit schräg verlaufenden Kanälen aufgeteilt werden, die sich zu einer gemeinsamen Austrittsfläche hin erstrecken. Die Stoffströme werden dabei an der Austrittsfläche gleichmäßig verteilt und miteinander vermischt.

Ausgehend von diesem Stand der Technik liegt der Erfindung folgende Aufgabenstellung zugrunde:

Ziel ist es, die Mischung möglichst schnell durchzuführen, um die Bildung von Folge- bzw. Nebenprodukten zu vermeiden. Dabei muß erreicht werden, daß die Edukte homogen miteinander gemischt werden, so daß innerhalb kürzester Zeit keine örtlichen und keine zeitlichen Überkonzentrationen der Edukte mehr auftreten. Bei chemisch miteinander reagierenden Fluiden soll eine vollständige Reaktion der Fluide erzielt werden. Bei Bedarf sollte auch die Reaktionswärme effektiv und schnellstmöglich ab- oder zugeführt werden können.

Diese Aufgabe wird erfindungsgemäß dadurch gelöst, daß mindestens zwei Edukte A, B durch eine ihnen jeweils zugeordnete Schar von Mikrokanälen in einem Mikrostruktur-Mischer in räumlich getrennte Fluidfäden aufgeteilt werden, die dann als Freistrahlen mit einem Durchmesser bzw. einer Dicke von 20 μm bis 250 μm, vorzugsweise 50 μm bis 150 μm und mit für das jeweilige Edukt gleichen Strömungsgeschwindigkeiten in einen Misch-/Reaktionsraum austreten, wobei jeder Freistrahl eines Eduktes A in unmittelbarer Nachbarschaft zu einem Freistrahl eines anderen Eduktes B in den Misch-/Reaktionsraum geführt wird und sich die benachbarten Freistrahlen durch Diffusion und/oder Turbulenz miteinander vermischen. Vorzugsweise werden in den Mikrokanälen laminare Strömungsbedingungen für die Edukte A, B aufrechterhalten. Es steht jedoch nichts im Wege, gegebenenfalls mit turbulenten Strömungen in den Mikrokanälen zu arbeiten.

Besonders bewährt hat sich eine Ausführungsform, bei der die Fluidfäden der Edukte A, B in abwechselnd übereinanderliegenden oder nebeneinanderliegenden Schichten in den Misch-/Reaktionsraum austreten.

Durch eine entsprechende Anordnung der Mikrokanäle läßt sich auch erreichen, daß die Fluidfäden der Edukte A, B schachbrettartig in den Misch-/Reaktionsraum austreten.

Wie bereits erwähnt, ist die Geometrie des Mikrostruktur-Mischers so ausgelegt, daß der Durchmesser bzw. die Dicke der Freistrahlen am Eintritt in den Misch-/Reaktionsraum auf einen Wert zwischen 20 μm und 250 μm, vorzugsweise zwischen 50 μm und 150 μm, eingestellt werden kann. Dabei liegt vorteilhaft das Verhältnis von Mittenabstand benachbarter Freistrahlen zum Durchmesser der Freistrahlen in einem Bereich von 1,1 bis 2, vorzugsweise 1,3 bis 1,5.

Eine Weiterentwicklung des erfindungsgemäßen Verfahrens besteht darin, daß in Nachbarschaft zu einem Freistrahl eines Eduktes zusätzlich ein Freistrahl eines temperierten inerten Fluids z. B. zu Heiz- oder Kühlzwecken in den Misch-/Reaktionsraum eingespeist wird.

Das erfindungsgemäße Verfahren beruht also darauf daß die Eduktströme A, B zunächst mittels des Mikrostruktur-Mischers konvektiv in feine Volumenelemente bzw. Fluidfäden mit einem Gitterabstand d aufgeteilt werden, die sich dann nach dem Austritt im Misch-/Reaktionsraum durch Diffusion und/oder Turbulenz miteinander vermischen.

Die Aufgabe des Mikrostruktur-Mischers ist es dabei, die Eduktströme konvektiv zu zerteilen und feine Fluidfäden mit einer charakteristischen Dicke d zu erzeugen, ohne daß die Ausgangskomponenten miteinander in Kontakt kommen. Durch gleiche geometrische Dimensionierung (gleicher Querschnitt und gleiche Länge) für die jeweils einem Edukt zugeordneten Mikrokanäle wird sichergestellt, daß aus allen jeweils einem Edukt zugeordneten Kanälen die Fluidfäden mit gleichen Strömungsgeschwindigkeiten austreten. Bei zwei Edukten A, B sind also die Strömungsgeschwindigkeiten in den Mikrokanälen jeweils für ein Edukt untereinander gleich. Die Strömungsgeschwindigkeiten der beiden Edukte (im Verhältnis zueinander) können aber durchaus unterschiedlich sein.

Dadurch wird örtlich eine möglichst homogene Eduktverteilung erreicht. Vorzugsweise wird eine Dicke d eingestellt, die in der Größenordnung des Konzentrations-Mikromaßes liegt, so daß nach Austritt aus dem Mlkrostruktur-Mischer, ohne daß ein weiterer Wirbelzerfall nötig ist, die Mikromischung der Komponenten schnell durch Diffusion erfolgen kann.

Das erfindungsgemäße Verfahren ermöglicht es, die Zeit für den turbulenten Wirbelzerfall bei der Vermischung im wesentlichen einzusparen und dadurch den Vermischungsvorgang wesentlich zu beschleunigen. Durch das Zerteilen der Eduktströme in feinste Volumenelemente innerhalb der Mikrostruktur, ohne daß die Eduktströme miteinander in Kontakt geraten und die homogene Verteilung der Edukte am Austritt aus der Mikrostruktur ermöglicht das Vermischungsverhalten von nahezu einem idealen Rohrreaktor einzustellen. Bei schnellen Reaktionen treten unerwünschte Neben- bzw. Folgeprodukte in wesentlich geringerem Maße auf als bei Mischern nach dem Stand der Technik. Eine Hauptanwendung sind daher schnelle Reaktionen, die charakteristische Reaktionszeiten <10 s und insbesondere <1 s aufweisen. Unter "Reaktionszeit" wird üblicherweise die Halbwertzeit verstanden; d.h. die Zeit nach dem Reaktionsbeginn, nach der die Eduktkonzentration auf den halben Wert abgefallen ist.

Zur Durchführung des erfindungsgemäßen Verfahrens hat sich ein statischer Mikro-Vermischer mit wenigstens einer Mischkammer und einem vorgeschalteten Führungsbauteil für die Zufuhr von Misch- bzw. Reaktionsfluiden (Edukte) bewahrt. Dabei ist das Führungsbauteil aus mehreren plattenartigen, übereinander geschichteten Elementen zusammengesetzt, die von schräg zur Mikro-Vermischer-Längsachse verlaufenden Kanälen durchzogen sind, wobei sich die Kanäle benachbarter Elemente berührungslos kreuzen und in die Mischkammer einmünden. Diese Vorrichtung ist erfindungsgemäß durch folgende Merkmale gekennzeichnet:

a) Die plattenartigen Elemente bestehen aus dünnen Folien, in die je eine Schar eng benachbarter, mit abwechselnder Schräge zur Mikrovermischer-Längsachse verlaufender Nuten eingearbeitet ist, so daß beim Übereinanderschichten der Folien je eine Reihe geschlossener Kanäle für die Führung der zu mischenden Fluide (Edukte A, B) entsteht.

b) Die Nuten haben Breiten und Tiefen von <250 $\mu$m bei Wanddicken der Zwischenstege und Nutböden von <70 $\mu$m.

c) Die von den Folien gebildeten Reihen von an die Mischkammer angrenzenden Mündungen der Kanäle liegen fluchtend übereinander, wobei die Reihen von Kanälen benachbarter Folien zur Fluideintrittsseite des Mikrovermischers hin so divergieren das die zu vermischenden Fluide (Edukte A, B) getrennt einspeisbar sind.

Alternativ ist zwischen je zwei Folien mit den schrägen, zur Fluideintrittsseite divergierenden Nuten eine Zwischenfolie geschaltet, die senkrecht zur Mikrovermischer-Längsachse verlaufende Nuten aufweist und zur Durchleitung eines Kühl- oder Heizmittels dient.

Gemäß einer weiteren Alternative ist an die Mischkammer ein Mikrowärmeübertrager angeschlossen. Die Mischkammer kann aber auch selbst als Mikrowärmeübertrager ausgebildet sein, der unmittelbar an das Führungsbauteil angeschlossen ist.

Mit der erfindungsgemäßen Vorrichtung werden die zu vermischenden Fluide reihenweise und "auf Lücke" in eine Vielzahl feinster, extrem eng benachbarter Stromfäden (Fluidfäden) unterteilt, die, beim Eintritt in die Mischkammer zusammengeführt, ein gemeinsames, entsprechend eng begrenztes Volumen ausfüllen und sich dadurch auf schnellstem und kürzestem Weg durchmischen können. Die Dichte der Kanalmündungen und damit der Stromfäden am Eintritt in die Mischkammer beträgt einige tausend Mündungen bzw. Stromfäden pro $cm^2$.

Die erfindungsgemäße Vorrichtung ermöglicht die Mischung zweier oder mehrerer Fluide. Wenn chemisch miteinander reagierende Fluide (Edukte) vermischt werden, können die dabei auftretende (exotherme Reaktionen) oder benötigte (endotherme Reaktionen) Reaktionswärme durch den angeschlossenen Mikrowärmeübertrager abgeleitet oder zugeführt werden.

Mit dem erfindungsgemäßen Verfahren bzw. bei Verwendung der erfindungsgemäßen Vorrichtung können folgende weitere Vorteile erzielt werden:

- Verbesserung von Ausbeute, Selektivität und Produktqualität bei bekannten Reaktionen

- Herstellung von Produkten mit neuen Eigenschaftsprofilen (z.B. höhere Reinheiten)

- Miniaturisierung von Reaktoren und Mischern, ggf. in Kombination mit Wärmetauschern

- Verbesserung des Sicherheitsstandards bei exothermen Reaktionen durch Verringerung des Hold-Up's und ggf. durch Verringerung der Abmessungen der Mikrokanäle unterhalb des Löschabstands (Verbesserte Zündrückschlagsicherung!)

Im folgenden wird die Erfindung anhand von Ausführungsbeispielen und Zeichnungen näher erläutert. Es zeigen

Fig. 1 schematisch die Vermischung und Reaktion von zwei Reaktanden in Form von Fluidballen A, B (Stand der Technik),

Fig. 2 die Vermischung zweier Reaktanden A, B (Edukte) in einem Strahl-/Düsenmischer (Stand der Technik),

Fig. 3 den prinzipiellen Aufbau eines Mikrokanalmischers für zwei Edukte A, B mit symmetrischen Strömungswegen,

Fig. 4 die Vermischung der aus dem Mikrokanalmischer in den Misch- bzw. Reaktionsraum eintretenden, den Edukten A, B zugeordneten Freistrahlen,

Fig. 5 eine Ausführungsform, bei der die räumliche Anordnung der den Edukten A, B zugeordneten Fluidfäden beim Eintritt in den Misch-/Reaktionsraum durch abwechselnd übereinanderliegende Schichten charakterisiert ist.

Fig. 6 eine zu Fig. 5 alternative Ausführungsform, bei der die Fluidfäden der Edukte A, B schachbrettartig in den Misch-/Reaktionsraum austreten.

Fig. 7 ein Fließschema für eine Apparatur zur Untersuchung chemischer Reaktionen, die nach dem erfindungsgemäßen Verfahren ablaufen und

Fig. 8 die mit der Apparatur gemäß Fig. 7 erzielten Versuchsergebnisse bei der Azokupplungsreaktion von $\alpha$-Naphtol mit 4-Sulfonsäurebenzoldiazoniumsalz

Fig. 9a mehrere, zu stapelnde Folien als Bauelemente für den Mikrokanalmischer

Fig. 9b und 9c zwei Ansichten eines Führungsbauteils aus Folien gem. Fig. 9a

Fig. 9d schematisch den Strömungsverlauf in einem Mikrokanalmischer

Fig. 10a und 10b schematisch einen Mikrokanalmischer mit kühl- oder heizbarem Führungsbauteil

Fig 11a im Schnitt einen Mikrokanalmischer, an dessen Mischkammer ein Wärmeübertrager angeschlossen ist

Fig. 11b einen Mikrokanalmischer mit einer als Wärmeübertrager ausgebildeten Mischkammer.

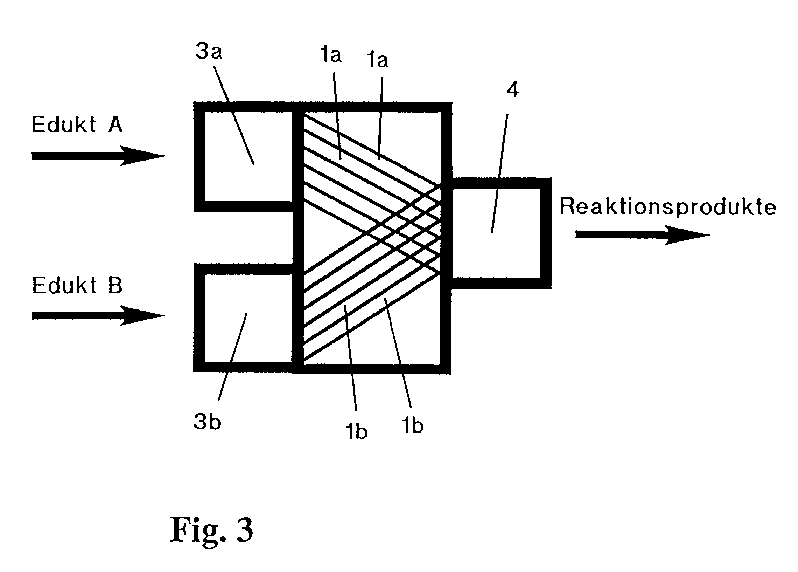

In Fig. 3 ist ein zur Durchführung des erfindungsgemäßen Verfahrens geeigneter Mikrostruktur-Mischer (Mikrokanalmischer) schematisch dargestellt. Das Bauprinzip dieses Mischers beruht darauf, daß verschiedene Lagen der Platten mit schrägverlaufenden Nuten oder Rillen vertikal übereinander in Sandwichbauweise gestapelt sind. Ein derartiger Aufbau ist z.B. in DE 3 926 466 insbesondere im Zusammenhang mit Fig. 1, beschrieben. Auf diese Beschreibung wird ausdrücklich Bezug genommen.

Auf eine Platte mit den Rillen oder Mikrokanälen 1a folgt jeweils eine Platte mit den Mikrokanälen 1b; d.h. zwei im Stapel unmittelbar übereinander angeordnete Platten sind jeweils mit einer Schar von Mikrokanälen 1a, 1b versehen, wobei die Mikrokanalscharen aufeinanderfolgender Platten einen Winkel $\alpha$ miteinander bilden und symmetrisch zur Horizontalachse in Fig. 3, d.h. spiegelbildlich zueinander angeordnet sind. Die Platten haben z.B. eine Dicke von 100 μm. Die lichte Weite der Mikrokanäle liegt typischerweise in der Größenordnung von 70 μm.

Die in Fig. 3 von der Bildmitte aus gesehen schräg nach oben verlaufenden Scharen von Mikrokanälen 1a münden linksseitig in eine Verteilerkammer 3a, der ein Reaktand oder Edukt A zugeführt werden kann. Analog münden die schräg nach unten verlaufenden Scharen der Mikrokanäle 1b linksseitig in eine Verteilerkammer 3b, der ein Edukt B (Reaktand) zugeführt werden kann. Beide Scharen von Mikrokanälen münden rechtsseitig, ohne sich zu durchkreuzen, in einen gemeinsamen Misch-/Reaktionsraum 4 ein. Die spiegelsymmetrische Anordnung der Mikrokanäle 1a, 1b ist nicht zwingend erforderlich. Die Mikrokanäle 1b können z.B. auch eine andere Neigung gegen die Horizontalachse haben als die Mikrokanäle 1a.

Wichtig ist jedoch, daß die Mikrokanäle einer Schar jeweils strömungstechnisch untereinander gleich sind, d.h. daß die Mikrokanäle 1a alle den gleichen Strömungswiderstand besitzen. Die gleiche Bedingung gilt für den Strömungswiderstand der Mikrokanäle 1b, wobei aber die Strömungswiderstände der beiden Mikrokanalscharen 1a, 1b (im Verhältnis zueinander) unterschiedlich sein können. Gleicher Strömungswiderstand kann dadurch erreicht werden, daß die Lange und der Querschnitt für alle Mikrokanäle 1a gleich sind.

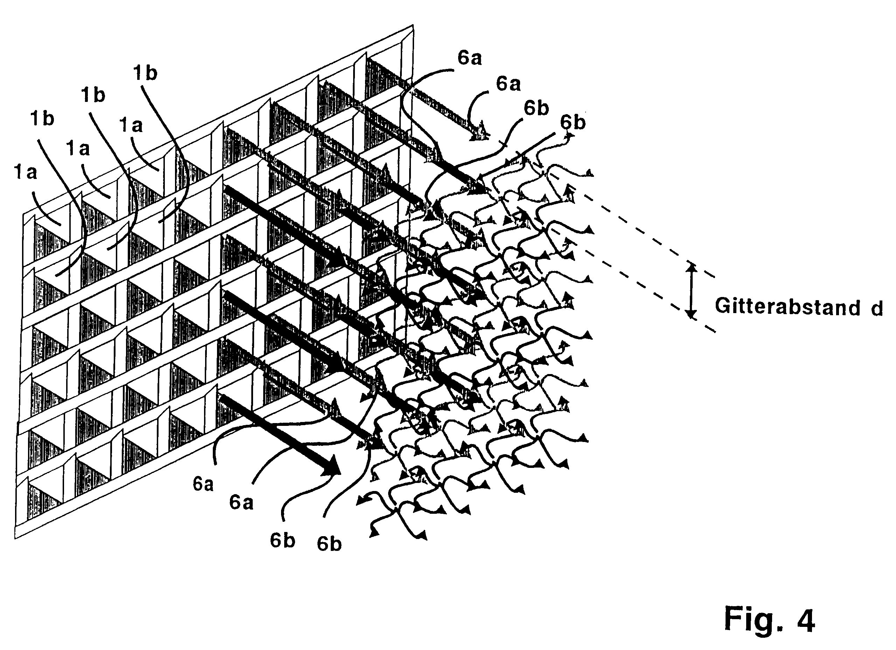

Das einer Verteilerkammer 3a, 3b zugeführte Edukt, z.B. ein gasförmiger Reaktand, verteilt sich jeweils auf die Mikrokanäle 1a, 1b. Die Zusammenführung der beiden Reaktanden erfolgt beim Eintritt in den Misch-/Reaktionsraum und wird im Folgenden anhand der Fig. 4 bis 6 näher beschrieben. In Fig. 4 ist der Mündungsquerschnitt des Mikrokanalmischers perspektivisch dargestellt.

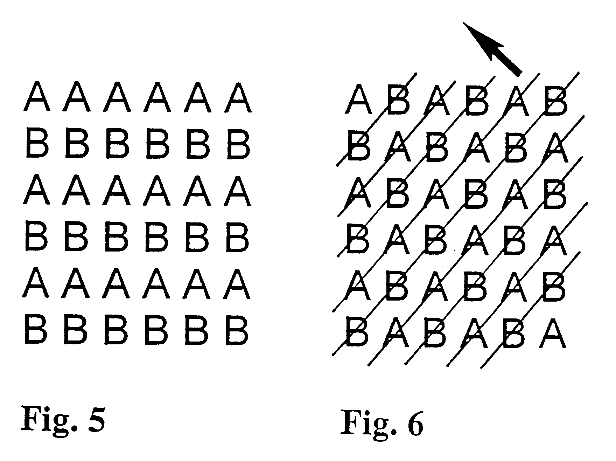

In der obersten Lage oder Platte münden z.B. die dem Edukt A zugeordneten Mikrokanäle 1a und in der darauffolgenden darunterliegenden Lage oder Platte die Mikrokanäle 1b des Eduktes B in den Misch-/Reaktionsraum ein. Darauf folgt wieder eine Lage oder Platte mit den zum Edukt A gehörenden Mikrokanälen usw.. In Fig. 4 ist auch schematisch dargestellt, wie die in den Mikrokanälen geführten Fluidfäden als Freistrahlen 6a, 6b in den Misch-/Reaktionsraum eintreten und sich mit zunehmender Entfernung von der Mündung untereinander vermischen. Die Mischung erfolgt dabei durch Diffusion und/oder Turbulenz, während in den Mlkrokanälen in der Regel laminare Strömungsbedingungen vorherrschen. Gleichzeitig mit der Mischung setzt auch die Reaktion der Edukte A, B ein. Das Reaktionsprodukt wird am Ende der Misch-/Reaktionskammer abgenommen (s. Fig. 3). In Fig. 5 ist noch einmal gezeigt, in welcher räumlichen Reihenfolge die Edukte A, B am Mündungsquerschnitt in den Misch-/Reaktionsraum eintreffen. Eine Schicht mit Fluidfäden des Eduktes A grenzt also jeweils an eine Schicht der Fluidfäden des Eduktes B an. Die Anordnung kann natürlich auch um 90° gedreht werden, so daß die Schichten nebeneinander liegen.

Eine Variante, bei der die Fluidfäden der Edukte A, B schachbrettartig in den Misch-/Reaktionsraum eintreten, ist in Fig. 6 gezeigt. Praktisch läßt sich eine derartige Anordnung realisieren, wenn Platten mit Mikrokanälen 1a, 1b in Pfeilrichtung (s. Fig. 6) übereinander gestapelt werden und die Anordnung so getroffen wird, daß die Kanalmündungen einer Lage gegenüber den Mündungen der darauffolgenden Lage versetzt wird.

Der Mikrokanalmischer gemäß Fig. 3 kann auch in der Weise modifiziert werden, daß drei oder mehr Edukte in jeweils getrennte Scharen von Mikrokanälen aufgeteilt werden, die dann im Misch-/Reaktionsraum zusammengeführt werden. Eine verfahrenstechnisch interessante Variante besteht darin, daß das dritte Edukt aus einem temperierten inerten Fluid besteht. Die Fluidfäden werden dann im Mikrokanal-Mischer so geführt, daß in Nachbarschaft zu einem Freistrahl eines Eduktes ein Freistrahl des temperierten inerten Fluids zu Heiz- oder Kühlzwecken in den Misch-/Reaktionsraum eingespeist wird.

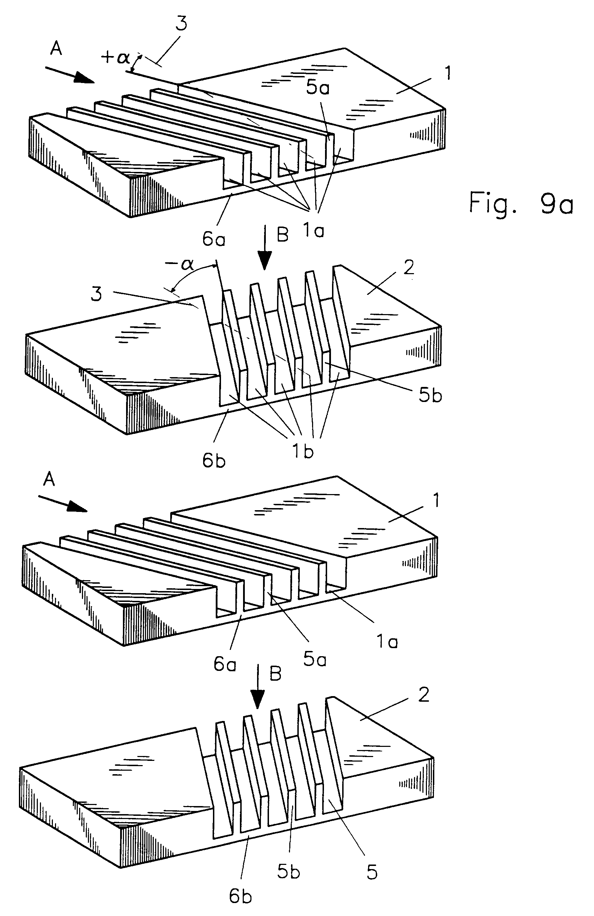

Nachfolgend wird anhand der Figuren 9a bis 11b eine praktische Ausführung des Mikrokanalmischers beschrieben, die sich besonders bewährt hat.

Die Folien 1 bzw. 2 gemäß Fig. 9a haben eine Dicke von 100 μm bei einer Länge und Breite im Millimeterbereich. Die Foliensorte 1 ist von einer Schar vorzugsweise paralleler, eng benachbarter und schräg zur Vermischerlängsachse 3 verlaufender Nuten oder Mikrokanäle durchzogen, die von hinten links beginnend gegenüber dieser Achse 3 einen spitzen Winkel +$\alpha$ haben und im mittleren Bereich der vorderen Folienlängsseite münden. Die Foliensorte 2 ist in derselben Art und Weise von Nuten oder Mikrokanälen 1b durchzogen; jedoch beträgt hier der Winkel zwischen Nutenlängsachse und Vermischerlängsachse -$\alpha$; d.h. die Nuten 1b verlaufen von rechts hinten zum mittleren Bereich der vorderen Folienlängsseite. Der Betrag des Winkels muß jedoch nicht der gleiche sein. Die Nuten 1a, 1b können mit Formdiamanten eingearbeitet werden und haben vorzugsweise eine Breite von <100 μm, eine Tiefe von 70 μm bei einer Stärke der Zwischenstege 5a, 5b von 15 μm; die Stärke der Nutböden 6a, 6b beträgt 30 μm.

Die für die Herstellung von Mikro-Nuten unterschiedlichster Querschnitte erforderlichen Werkzeuge und Vorrichtungen sind z.B. in der DE 37 09 278 C2 dargestellt und beschrieben. Die Pfeile A und B symbolisieren die Strömungsrichtungen der zu mischenden Fluide A und B.

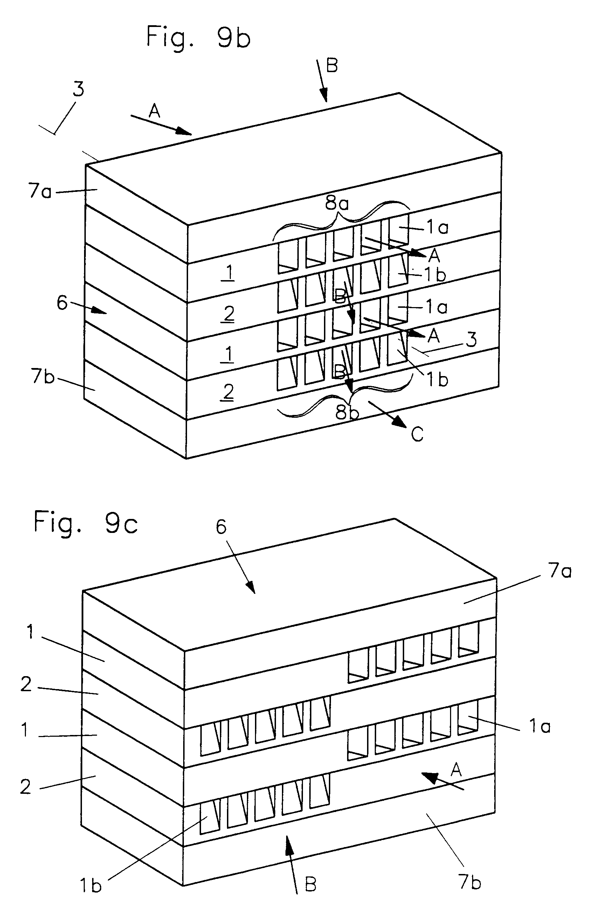

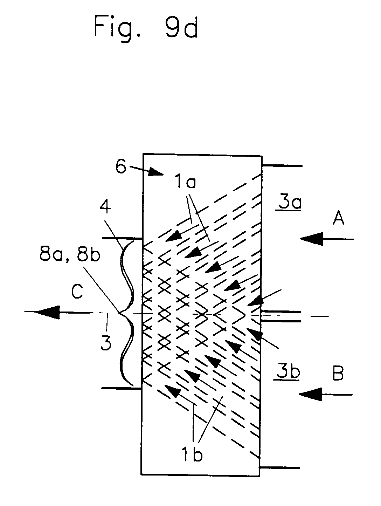

Für die Herstellung eines Führungsbauteils 6 werden die Foliensorten 1 und 2 abwechselnd übereinandergeschichtet, mit einer oberen und einer unteren Deckplatte 7a, 7b versehen und z.B. mittels Diffusionsschweißen zu einem homogenen, vakuumdichten und druckfesten Mikrostrukturkörper verbunden. Wie aus Fig. 9b zu ersehen ist, liegen die von den Folien 1 und 2 gebildeten Reihen 8a, 8b von an die Mischkammer 4 angrenzenden Mündungen der Kanäle 1a bzw. 1b fluchtend übereinander (s.a. Fig. 9d).

Diese Reihen 8a, 8b bilden einen gemeinsamen, z.B. quadratischen Querschnitt mit einer Dichte von ca. fünftausend Mündungen pro $cm^2$, die an die gemeinsame Mischkammer 4 angrenzen. Die Fig. 9c zeigt das Führungsbauteil 6 von der Zuströmseite der Fluide A und B aus gesehen. Wie hieraus und aus der Draufsicht gemäß Fig. 9d zu ersehen ist, divergieren die zur Längsachse 3 schräg verlaufenden Kanäle 1a, 1b von der Mischkammer 4 aus abwechselnd zur Fluideintrittsseite hin so, daß die Fluide A und B über je eine Eintrittskammer oder Verteilerkammer 3a und 3b getrennt dem Führungsbauteil 6 eingespeist werden können. Nach dem Austritt aus dem Führungsbauteil 6 werden die feinen Stromfäden (Freistrahlen) 6a, 6b der Fluide A und B innig miteinander vermischt und bilden in der Mischkammer 4 eine gemeinsame Strömung C (siehe auch Fig. 4).

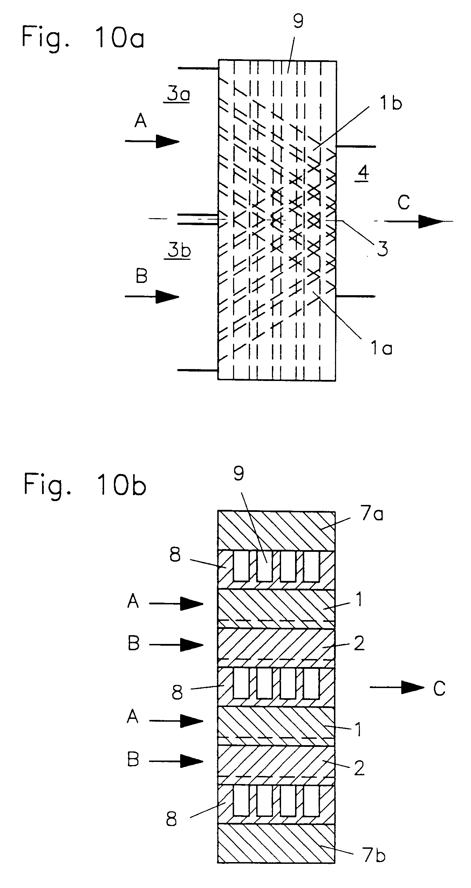

Die Fig. 10a und 10b zeigen eine Variante, bei der zwischen zwei Foliensorten 1 und 2 bzw. zwischen die Folien und die Deckplatten 7a, 7b Zwischenfolien 8 geschaltet sind, die senkrecht zur Längsachse 3 verlaufende Nuten 9 aufweisen zur Durchleitung eines Kühl- oder Heizmittels. Dadurch kann die Vermischungszeit und die Reaktionsgeschwindigkeit der Fluide A und B beeinflußt werden.

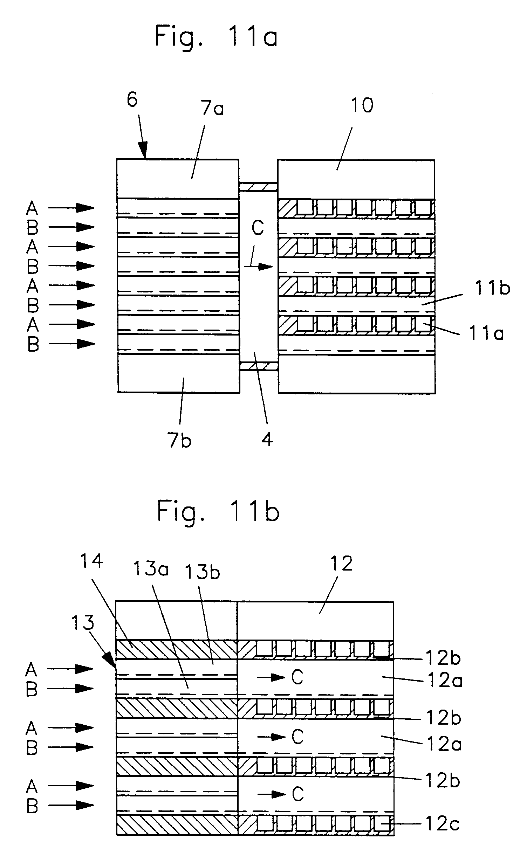

In Fig. 11a ist ein Führungsbauteil 6 entsprechend den Fig. 9a und 9d im Schnitt dargestellt mit angeschlossener Mischkammer 4. An diese Mischkammer ist ein Wärmeübertrager 10 angeschlossen, der ähnlich wie bei der Variante gemäß Fig. 10a und 10b von quer zur Strömungsrichtung C verlaufenden Kanälen 11a durchzogen ist zur Ab- bzw. Zufuhr der Reaktionswärme aus bzw. zu den Kanälen 11b.

In Fig. 11b ist der Wärmeübertrager 12 direkt an das Führungsbauteil 13 angeschlossen. Dabei ist die Anordnung durch Distanzfolien 14 so getroffen, daß je zwei übereinanderliegende Kanäle 13a, 13b für die Fluide A, B je in einen gemeinsamen Teilmischraum 12a des Wärmeübertragers ausmünden, wobei diese Teilmischräume 12a an Folien 12b angrenzen, die quer zur Strömungsrichtung C verlaufende Kanäle 12c aufweisen. Diese Kanäle 12c führen ein Kühl- oder Heizmittel, mit dem bezüglich der Misch- und Reaktionszonen 12a Wärme ab- oder zugeführt werden kann.

### Beispiel

Zur Beurteilung des Vermischungsverhaltens verschiedenster Apparaturen wird in der Literatur die Azokupplungsreaktion von alpha-Naphtol mit 4-Sulfonsäurebenzoldiazoniumsalz eingesetzt [2, 8, 9]. Diese Reaktion entspricht dem o.g. Reaktionsschema einer Reaktion mit Folgereaktionen, wobei das Folgeprodukt auf einfache Weise mit Hilfe von Absorptionsspektren analysiert werden kann. Die Güte des Mischvorganges wird dabei durch die Selektivität an Folgeprodukt S, $X_S$, beurteilt. Je mehr S gebildet wird, desto schlechter ist die Vermischung.

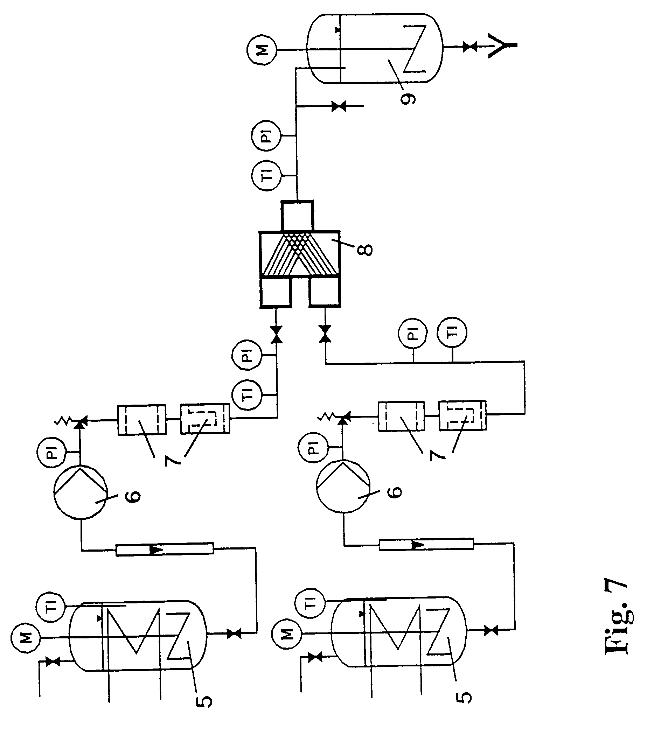

Das Verfahren zur Durchführung schneller chemischer Reaktionen mittels Mikrostruktur-Mischung wurde in der in Fig. 7 dargestellten Apparatur untersucht. Sie besteht aus den Vorlagebehältern 15 für die Ausgangskomponenten A und B, den Dosier- und Regelvorrichtungen 16, Filtern 17 zum Schutz des Mikrostruktur-Mischers vor Verstopfungen, dem Mikrostruktur-Mischer 18 und dem Auffangbehälter 19 für das Produktgemisch. Der verwendete Mikrostruktur-Mischer erzeugte Freistrahlen der Dimension 100 μm Breite und 70 μm Höhe. Die Strahlen waren so angeordnet, daß die Komponenten A bzw. B in abwechselnd übereinander angeordneten Schichten aus dem Mischer austraten.

Es wurden Volumenstromverhältnisse $\alpha = V_A/V_B$ von 10 und 20 eingestellt. Dabei wurde bei Leistungskennzahlen $\Psi$ größer $10^5$ gearbeitet. Die reaktionskinetischen Daten und die Vorschrift für die Anwendung der Modellreaktionen sind der Literatur zu entnehmen [2, 8, 9, 10].

Gefahren wurde mit einem stöchiometrischen Verhältnis von 1,05 und einer konstanten Naphtol-Ausgangskonzentration von 1,37 $mol/m^3$. Die Leistungskennzahl $\Psi$ berechnet sich folgendermaßen:

$$\Psi = (\Delta p_{Naph.} \cdot V_{Naph.} + \Delta p_{Sulf.} \cdot V_{Sulf.}) / \{k_2 \cdot c_{a0} \cdot \eta \cdot (V_{Naph.} + V_{Sulf.})\}$$

mit

| | |
|---|---|
| $\Delta p_{Naph.}$ | Stoßverlust Naphtol-Lösung im Mischer |
| $\Delta p_{Sulf.}$ | Stoßverlust Sulfanilsäure-Lösung im Mischer |
| $V_{Naph.}$ | Volumenstrom Naphtol-Lösung |
| $V_{Sulf.}$ | Volumenstrom Sulfanilsäure-Lösung |
| $k_2$ | Reaktionsgeschwindigkeitskonstante Folgereaktion |
| $c_{a0}$ | Ausgangskonzentration Naphtol |
| $\eta$ | dyn. Viskosität |

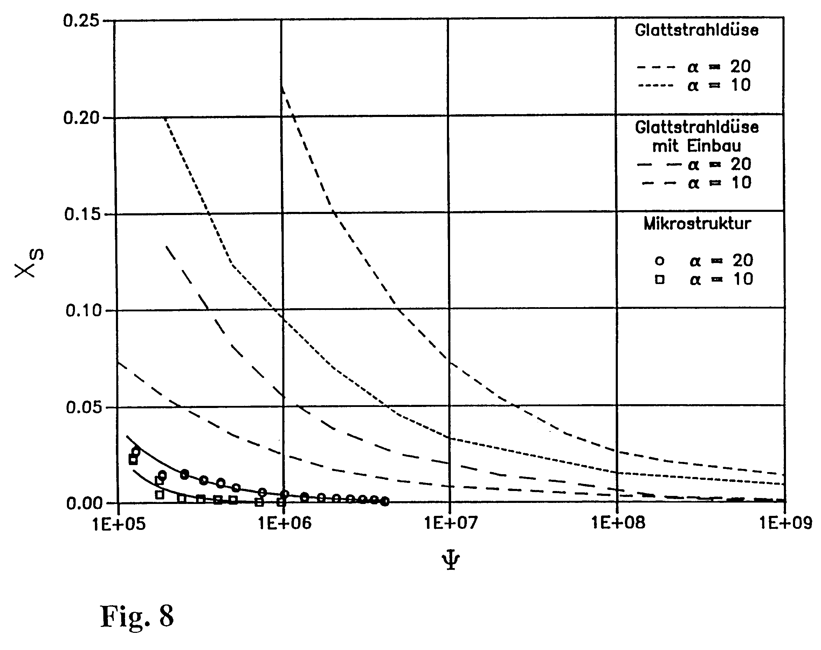

In Fig. 8 ist die Selektivität an unerwünschtem Folgeprodukt $X_S$ gegen die Leistungskennzahl $\Psi$ aufgetragen.

Es zeigte sich, daß für die Volumenstromverhältnis $\alpha$ von 10 und 20 bei gleicher Leistungskennzahl bei dem erfindungsgemäßen Verfahren (Kurven ◯ und ☐) wesentlich weniger unerwünschtes Folgeprodukt gebildet wird als bei Verwendung von Düsenmischern nach dem Stand der Technik (Düsenmischer mit Glattstrahldüse, Düsenmischer mit Glattstrahldüse und Einbau zur Verhinderung von Rückvermischung) (gestrichelte Kurven). Die den gestrichelten Kurven entsprechenden Daten sind der Literatur entnommen [2, 8, 9, 10]. Dieser Befund ist völlig überraschend, wenn man von der bestehenden Lehrmeinung ausgeht, daß die Mischintensität allein durch die Leistungskennzahl und die Stoffdaten bestimmt wird.

**Literatur**

[1] Brodkey, R. S. (ed.)
Turbulence in Mixing Operations Theory and Application to Mixing and Reaction
Academic Press, Inc., New York, San Francisco, London, 1975

[2] Tebel, K. H.; May, H.-O.
Der Freistrahlrohrreaktor - Ein effektives Reaktordesign zur Unterdrückung von Selektivitätsverlusten durch schnelle, unerwünschte Folgereaktionen
Chem.-Ing.-Tech. MS 1708/88, Synopse in Chem.-Ing.-Tech. 60, 1988

[3] Zehner, P.; Bittins, K.
Düsenreaktoren
Fortschr. Verf. Technik 23, 1985, 373

[4] Tosun, G.
A Study of Micromixing in Tee Mixers
Ind. Eng. Chem. Res. 26, 1987, 1184

[5] Batchelor, G. K.
Small-scale Variation of Convected Quantities Like Temperature in Turbulent Fluid
J. Fluid Mech. 5, 1959, 113

[6] Baldyga, J.; Bourne, J. R.
Micromixing in Inhomogeneous Turbulence
Chem. Eng. Sci. 43, 1988, 107

[7] Offenlegungsschrift DE 39 26 466 A 1

[8] Brodkey, R. S.
Fundamentals of Turbulent Motion, Mixing and Kinetics
Chem. Eng. Commun. 8, 1981, 1

[9] Bourne, J. R.; Hilber, C.; Tovstiga, G.
Kinetics of the Azo Coupling Reactions Between 1-Naphthol and Diazotized Sulphanilic Acid
Chem. Eng. Commun. 37, 1985, 293

[10] Bourne, J. R.; Kozicki, F.; Rys, P.
Mixing and Fast Chemical Reaction I:
Test Reactions to Determine Segregation
Chem. Eng. Sci. 36, 1981, 1643

[11[ WO 91/16970 A1

**Patentansprüche**

1. Verfahren zur Durchführung chemischer Reaktionen zwischen gasförmigen und/oder flüssigen Reaktionspartnern (Edukte), bei dem mindestens zwei Edukte A, B durch eine ihnen jeweils zugeordnete Schar von Mikrokanälen in räumlich getrennte Fluidfäden aufgeteilt werden, die anschließend in einen gemeinsamen Misch- und Reaktionsraum austreten, dadurch gekennzeichnet, daß man die Fluidfäden der Edukte A, B als Freistrahlen mit einem Durchmesser bzw. einer Dicke von 20 μm bis 250 μm, vorzugsweise 50 μm bis 150 μm und mit für das jeweilige Edukt gleichen Strömungsgeschwindigkeiten in den Misch-/Reaktionsraum austreten läßt, wobei jeder Freistrahl eines Eduktes A in unmittelbarer Nachbarschaft zu einem Freistrahl eines anderen Eduktes B in den Misch- und Reaktionsraum geführt wird und sich die benachbarten Freistrahlen durch Diffusion und/oder Turbulenz miteinander vermischen.

2. Verfahren nach Anspruch 1, dadurch gekennzeichnet, daß in den Mikrokanälen laminare Strömungsbedingungen für die Edukte A, B aufrechterhalten werden.

3. Verfahren nach Anspruch 1 bis 2, dadurch gekennzeichnet, daß die Fluidfäden der Edukte A, B in abwechselnd übereinanderliegenden oder nebeneinanderliegenden Schichten in den Reaktionsraum austreten.

4. Verfahren nach Anspruch 1 bis 2, dadurch gekennzeichnet, daß die Fluidfäden der Edukte A, B schachbrettartig in den Reaktionsraum austreten.

5. Verfahren nach Anspruch 1 bis 4, dadurch gekennzeichnet, daß das Verhältnis von Mittenabstand benachbarter Freistrahlen zu Durchmesser der Freistrahlen auf Werte zwischen 1,1 bis 2, vorzugsweise 1,3 bis 1,5 eingestellt wird.

6. Verfahren nach Anspruch 1 bis 5, dadurch gekennzeichnet, daß in Nachbarschaft zu einem Freistrahl eines Eduktes zusätzlich ein Freistrahl eines temperierten Inertfluids in den Misch-/Reaktionsraum eingespeist wird.

7. Mikro-Vermischer, insbesondere zur Durchführung des Verfahrens nach Anspruch 1 bis 6, mit wenigstens einer Mischkammer und einem vorgeschalteten Führungsbauteil für die Zufuhr von zu mischenden Fluiden zu der Mischkammer, wobei das Führungsbauteil aus mehreren plattenartigen, übereinandergeschichteten Elementen zusammengesetzt ist, die von schräg zur Mikro-Vermischer-Längsachse verlaufenden Kanälen durchzogen sind, und wobei die Kanäle benachbarter Elemente sich berührungslos kreuzen und in die Mischkammer ausmünden, gekennzeichnet durch folgende Merkmale:

  a) die plattenartigen Elemente bestehen aus dünnen Folien (1, 2), in die je eine Schar eng benachbarter, mit abwechselnder Schräge zur Mikro-Vermischer-Längsachse (3) verlaufender Nuten (1a, 1b) eingearbeitet ist, so daß beim Übereinanderschichten der Folien (1, 2) je eine Reihe (8a bzw. 8b) geschlossener Kanäle für die Führung der zu mischenden Fluide (A, B) entsteht;

  b) die Nuten (1a, 1b) haben Breiten und Tiefen von < 250 μm bei Wanddicken der Zwischenstege (5a, 5b) und Nutböden (6a, 6b) von < 70 μm.

  c) die von den Folien (1, 2) gebildeten Reihen (8a, 8b) von an die Mischkammer (4) angrenzenden Mündungen der Kanäle liegen fluchtend übereinander, wobei die Reihen von Kanälen (1a, 1b) benachbarter Folien zur Fluideintrittsseite (3a, 3b) des Mikrovermischers hin so divergieren, daß die zu vermischenden Fluide (A, B) getrennt einspeisbar sind.

8. Mikro-Vermischer nach Anspruch 7, dadurch gekennzeichnet, daß zwischen je zwei Folien (1, 2) mit den schrägen, zur Fluideintrittsseite divergierenden Nuten eine Zwischenfolie (8) geschaltet ist, die senkrecht zur Mikro-Vermischer-Längsachse (3) verlaufende Nuten (9) aufweist zur Durchleitung eines Kühl- oder Heizmittels.

9. Mikro-Vermischer nach Anspruch 7 oder 8, dadurch gekennzeichnet, daß an die Mischkammer (4) ein Mikrowärmeübertrager (11) angeschlossen ist.

10. Mikro-Vermischer nach Anspruch 7 oder 8, dadurch gekennzeichnet, daß die Mischkammer als Mikrowärmeübertrager ausgebildet ist, der unmittelbar an das Führungsbauteil (13) angeschlossen ist.

**Claims**

1. A method for carrying out chemical reactions between gaseous and/or fluid reaction partners (educts), in which at least two educts A, B are divided by their respective groups of microchannels into spatially separated fluid filaments, which then enter a common mixing and reaction chamber, characterised in that the fluid filaments of the educts A, B are allowed to enter the mixing/reaction chamber as free jets with a diameter or a thickness of 20 μm to 250 μm, preferably 50 μm to 150 μm and at the same flow velocity for each of the educts, each free jet of an educt A being supplied to the mixing and reaction chamber immediately adjacent to a free jet of a different educt B and the adjacent free jets mixing together by diffusion and/or turbulence.

2. A method according to claim 1, characterised in that laminar flow conditions are maintained in the microchannels for the educts A, B.

3. A method according to claims 1 to 2, characterised in that the fluid filaments of the educts A, B enter the reaction chamber in alternately superimposed or adjacent layers.

4. A method according to claims 1 to 2, characterised in that the fluid filaments of the educts A, B enter the reaction chamber in a chessboard pattern.

5. A method according to claims 1 to 4, characterised in that the ratio of the centre-to-centre distance of adjacent free jets to the diameter of the free jets is adjusted to a value of between 1.1 and 2, preferably between 1.3 and 1.5.

6. A method according to claims 1 to 5, characterised in that a free jet of a tempered inert fluid is additionally fed into the mixing/reaction chamber in the Vicinity of a free jet of an educt.

7. A micro-mixer, in particular for carrying out the method according to claims 1 to 6, with at least one mixing chamber and an upstream guide component for supplying fluids to be mixed to the mixing chamber, the guide component being composed of a plurality of plate-like, layered elements, which are penetrated by channels extending at an angle to the micro-mixer longitudinal axis, the channels of adjacent elements intersecting without contact and opening into the mixing chamber, characterised by the following features:

a) the plate-like elements are made of thin films (1, 2), in which a group of closely adjacent grooves (1a, 1b) extending at alternate angles to the micro-mixer longitudinal axis (3) is formed, so that when the films (1, 2) are superimposed in layers a row (8a or 8b) of closed channels is formed for conducting the fluids (A, B) to be mixed;

b) the grooves (1a, 1b) have widths and depths <250 $\mu$m with wall thicknesses of the intermediate webs (5a, 5b) and groove bases (6a, 6b) <70 $\mu$m;

c) the rows (8a, 8b) formed by the films (1, 2) of channel openings adjoining the mixing chamber (4) are superimposed in alignment, the rows of channels (1a, 1b) of adjacent films diverging towards the fluid entry side (3a, 3b) of the micromixer, so that the fluids (A, B) to be mixed can be supplied separately.

8. A micro-mixer according to claim 7, characterised in that an intermediate film (8) is fitted in each case between two films (1, 2) with the inclined grooves diverging towards the fluid entry side, the intermediate film comprising grooves (9) extending perpendicular to the micro-mixer longitudinal axis (3) for conducting a cooling or heating agent.

9. A micro-mixer according to claim 7 or 8, characterised in that a micro heat exchanger (11) is connected to the mixing chamber (4).

10. A micro-mixer according to claim 7 or 8, characterised in that the mixing chamber is constructed as a micro heat exchanger, which is directly connected to the guide component (13).

## Revendications

1. Procédé pour la mise en oeuvre de réactions chimiques entre des partenaires de réaction gazeux et/ou liquides (réactifs), dans lequel au moins deux réactifs A, B sont divisés chacun en filets de fluide séparés dans l'espace, chacun par un ensemble de microcanaux qui leur est associé, lesquels filets de fluide sortent ensuite dans une chambre commune de mélange et de réaction, caractérisé en ce que l'on fait sortir les filets de fluide des réactifs A, B dans la chambre de mélange/réaction sous la forme de jets libres d'un diamètre ou d'une épaisseur de 20 $\mu$m à 250 $\mu$m, de préférence de 50 $\mu$m à 150 $\mu$m, et qui présentent tous la même vitesse d'écoulement pour chaque réactif, chaque jet libre d'un réactif A étant amené dans la chambre de mélange et de réaction au voisinage immédiat d'un jet libre d'un autre réactif B, et les jets libres voisins se mélangeant les uns avec les autres par diffusion et/ou turbulence.

2. Procédé selon la revendication 1, caractérisé en ce que l'on maintient dans les microcanaux des conditions d'écoulement laminaire des réactifs A, B.

3. Procédé selon les revendications 1 à 2, caractérisé en ce que les filets de fluide des réactifs A, B sortent dans la chambre de réaction en couches alternées superposées ou accolées.

4. Procédé selon les revendications 1 à 2, caractérisé en ce que les filets de fluide des réactifs A, B sortent dans la chambre de réaction en forme de damier.

5. Procédé selon les revendications 1 à 4, caractérisé en ce que le rapport entre l'écart moyen de deux jets libres voisins et le diamètre des jets libres est ajusté à des valeurs comprises entre 1,1 et 2, et de préférence entre 1,3 et 1,5.

6. Procédé selon les revendications 1 à 5, caractérisé en ce qu'au voisinage d'un jet libre d'un réactif, on introduit de plus dans la chambre de mélange/réaction un jet libre d'un fluide inerte à température contrôlée.

7. Micromélangeur, en particulier en vue de la mise en oeuvre du procédé selon les revendications 1 à 6, comportant au moins une chambre de mélange et un composant de guidage amont servant à apporter dans la chambre de mélange les fluides à mélanger, le composant de guidage étant constitué de l'assemblage de plusieurs éléments en forme de plaques empilées en couches superposées, qui sont traversées par des canaux s'étendant obliquement par rapport à l'axe longitudinal du mélangeur, et dans lequel les canaux d'éléments voisins se croisent sans se toucher et débouchent dans la chambre de mélange, caractérisé par les caractéristiques suivantes:

   a) les éléments en forme de plaque sont constitués de minces feuilles (1, 2) dans chacune desquelles est Pratiqué un ensemble de rainures (1a, 1b) étroitement voisines, qui s'étendent obliquement en alternance par rapport à l'axe longitudinal (3) du micromélangeur, de telle sorte que lorsque l'on empile les feuilles (1, 2) les unes au-dessus des autres, on obtient chaque fois une série (8a, 8b) de canaux fermés servant au guidage des fluides (A, B) à mélanger;

   b) les rainures (1a, 1b) présentent une épaisseur et une profondeur < 250 $\mu$m, avec des parois intermédiaires (5a, 5b) et des fonds de rainures (6a, 6b) dont l'épaisseur est < 70 $\mu$m;

   c) les séries (8a, 8b), formées par les feuilles (1, 2) des embouchures des canaux contiguës à la chambre de mélange (4) sont alignées les unes au-dessus des autres, et dans le micromélangeur, les séries de canaux (1a, 1b) de feuilles voisines divergent en direction du côté d'entrée du fluide (3a, 3b) de telle sorte que les fluides (A, B) à mélanger puissent être introduits séparément.

8. Micromélangeur selon la revendication 7, caractérisé en ce qu'entre deux feuilles (1, 2) dotées des rainures obliques divergeant en direction du côté d'entrée du fluide est chaque fois placée une feuille intermédiaire (8) qui présente des rainures (9) s'étendent perpendiculairement par rapport à l'axe longitudinal (3) du micromélangeur, pour permettra le passage d'un fluide de refroidissement ou de chauffage.

9. Micromélangeur selon les revendications 7 ou 8, caractérisé en ce qu'un microdispositif de transfert de chaleur (11) est raccordé à la chambre de mélange (4).

10. Micromélangeur selon les revendications 7 ou 8, caractérisé en ce que la chambre de mélange est réalisée sous la forme d'un microdispositif de transfert de chaleur qui est raccordé directement au composant de guidage (13).

t1

A     B

R

t2 > t1

A     B

R    S

t3 > t2

A     B

Fig. 1

Fig. 2

**Fig. 3**

Edukt A

Edukt B

Reaktionsprodukte

3a 1a 1a 4

3b 1b 1b

**Fig. 4**

Gitterabstand d

EP 0 758 918 B1

A A A A A A
B B B B B B
A A A A A A
B B B B B B
A A A A A A
B B B B B B

Fig. 5

A B A B A B
B A B A B A
A B A B A B
B A B A B A
A B A B A B
B A B A B A

Fig. 6

Fig. 7

17

Fig. 8

EP 0 758 918 B1

Fig. 9a

Fig. 9b

Fig. 9c

# Fig. 9d

Fig. 10a

Fig. 10b

## Fig. 11a

## Fig. 11b